# EUROPÄISCHE PATENTSCHRIFT

(11) **EP 1 613 449 B1**
(45) Veröffentlichungstag und Bekanntmachung des Hinweises auf die Patenterteilung: **02.05.2012**
(21) Anmeldenummer: 04717577.3
(22) Anmeldetag: 05.03.2004
(51) Int. Cl.: C21D 8/00

(54) **VERFAHREN ZUM HERSTELLEN VON SCHRAUBENFEDERN ODER STABILISATOREN**
METHOD FOR PRODUCING HELICAL SPRINGS OR STABILISERS
PROCEDE DE FABRICATION DE RESSORTS HELICOIDAUX OU DE STABILISATEURS

(30) Priorität: 04.04.2003 DE 10315419
(43) Veröffentlichungstag der Anmeldung: 11.01.2006
(73) Patentinhaber: ThyssenKrupp Bilstein Suspension GmbH, 58256 Ennepetal (DE)
(72) Erfinder: VONDRACEK, Hans, 58339 Brekerfeld (DE); DZIEMBALLA, Hans, 58642 Iserlohn (DE); MANKE, Lutz, 58097 Hagen (DE); BOROWIKOW, Alexander, 16230 Sydower Fliess (DE)
(74) Vertreter: Adams, Steffen
(86) Internationale Anmeldenummer: PCT/EP2004/002280
(87) Internationale Veröffentlichungsnummer: WO 2004/087367

(56) Entgegenhaltungen:
- EP-A- 0 753 595
- DE-A1- 4 340 568
- DE-A1- 10 030 823
- DE-A1- 19 637 968
- DE-A1- 19 839 383
- DE-C1- 19 546 204
- FR-A- 2 477 914

## Beschreibung

Die Erfindung betrifft ein Verfahren zum Herstellen von Schraubenfedern oder Stabilisatoren aus Stahl nach dem Oberbegriff des Anspruchs 1.

Der DE 43 40 568 C2 ist ein Verfahren zum kontinuierlichen Vergüten von Stahldraht zu entnehmen, das folgende Schritte beinhaltet:
- Schnellerwärmen des Drahtes auf eine Temperatur im Austenitbereich mit einer Geschwindigkeit zwischen 85 und 100°C/s;
- Halten des Stahldrahtes im Austenitbereich während einer Zeit von 10 bis 60 s;
- Abschrecken des Stahldrahtes bis auf Raumtemperatur mit einer Geschwindigkeit > 80°C/s;
- Schnellerwärmung auf Anlasstemperatur mit einer Geschwindigkeit von 85 bis 95°C/s;
- Halten auf Anlasstemperatur während einer Zeit von 60 bis 100 s;
- Abkühlen des Drahtes mit einer für Wasserkühlung üblichen Geschwindigkeit > 50°C/s.

Zwischen Schritt 2 und 3 kann der Draht dicht oberhalb der Ac3-Temperatur gewalzt werden. Dabei wird der Draht in einem ersten Stich ovalisiert, im zweiten Stich rundgewalzt und nachfolgend durch eine Kalibrierdüse gezogen.

In der DE 195 46 204 C1 wird ein Verfahren zur Herstellung von hochfesten Gegenständen aus einem Vergütungsstahl und Anwendung dieses Verfahrens zur Erzeugung von Federn beschrieben. Der Stahl mit (in Masse-%) 0,4 bis 0,6 % C, bis 1 % Si, bis 1,8 % Mn, 0,8 bis 1,5 % Cr, 0,03 bis 0,10 % Nb, 0 bis 0,2 % V, Rest Eisen soll wie folgt behandelt werden:
- Das Vormaterial wird im Austenitgebiet bei Temperaturen von 1050 bis 1200°C lösungsgeglüht;
- Unmittelbar anschließend wird das Vormaterial bei einer Temperatur oberhalb der Rekristallisationstemperatur in einer ersten Stufe warmverformt;
- Unmittelbar anschließend wird das Vormaterial bei einer Temperatur unterhalb der Rekristallisationstemperatur, aber oberhalb der Ac3-Temperatur in einer zweiten Stufe warmverformt;
- Das Walzerzeugnis wird anschließend bei einer Temperatur oberhalb der Ac3-Temperatur zur Ausführung weiterer Umform- und Bearbeitungsvorgänge gehalten und danach
- bis unterhalb der Martensittemperatur abgekühlt, worauf
- es abschließend angelassen wird.

Der DE 196 37 968 C2 ist ein Verfahren zur hochtemperatur-thermomechanischen Herstellung von Federblättern für Blattfedern und/oder Blattfederlenkern zu entnehmen, das auf einer zweistufigen thermomechanischen Parabelfederherstellung basiert. Dem Verfahren liegen folgende Schritte zugrunde:
- Das Ausgangsmaterial wird mit einer Aufheizgeschwindigkeit zwischen 4°C/s und 30°C/s auf Austenitisierungstemperatur angewärmt;
- Die Austenitisierungstemperatur beträgt 1100 □ 100°C,
- das Material wird von der Austenitisierungstemperatur auf die Temperatur der ersten Walzstufe mit einer Abkühlgeschwindigkeit zwischen 10°C/s und 30°C/s abgekühlt.
- Zunächst wird in der ersten Walzstufe bei einer Temperatur von 1050 □ 100°C mit einer über die Länge des Federblattes nicht konstanten Formänderung zwischen 15 % und 80 % in einen oder mehreren Stichen vorgewalzt.
- Von der Temperatur der ersten Walzstufe wird auf die Temperatur der zweiten Walzstufe mit einer Abkühlgeschwindigkeit zwischen 10°C/s und 30°C/s abgekühlt.
- In der zweiten Walzstufe wird bei einer Temperatur von 880 □ 30°C mit einer über die Länge des Federblattes konstanten Formänderung zwischen 15 % und 45 % in einem oder mehreren Stichen mit unter Last anstellbaren Walzen fertiggewalzt.

Schließlich offenbart die DE 198 39 383 C2 ein Verfahren zur thermomechanischen Behandlung von Stahl für torsionsbeanspruchte Federelemente, wobei das Ausgangsmaterial auf eine Temperatur oberhalb der Rekristallisationstemperatur und anschließend bei einer solchen Temperatur oberhalb der Rekristallisationstemperatur in mindestens zwei Umformschritten umgeformt wird, dergestalt, daß sich eine dynamische und/oder statische Rekristallisation des Austenites ergibt. Der derart rekristallisierte Austenit des Umformerzeugnisses wird abgeschreckt und angelassen. Zum Einsatz soll ein Silizium-Chrom-Stahl mit einem Kohlenstoffgehalt von 0,35 bis 0,75 % eingesetzt werden, der mit Vanadium oder einem anderen Legierungselement mikrolegiert ist.

Die dem Stand der Technik zu entnehmenden Verfahren zur thermomechanischen Behandlung von aus Stahl bestehenden Gegenständen basieren im Wesentlichen auf mehrstufigen Umformschritten, wobei eine mehrfache Abkühlung/Aufheizung des Ausgangsmateriales notwendig ist, um die später am Endprodukt sich einstellenden Parameter zu erzeugen.

Der Erfindung liegt die Aufgabe zugrunde, ein Verfahren zum Herstellen von Schraubenfedern oder Stabilisatoren aus Stahl nach dem Oberbegriff des Anspruchs 1 bereitzustellen, das eine gezielte, auf das Belastungsprofil des Endproduktes ausgerichtete Verbesserung der Eigenschaftsparameter ermöglicht.

Diese Aufgabe wird durch ein Verfahren mit den Merkmalen des Patentanspruchs 1 gelöst.

Vorteilhafte Aus- und Weiterbildungen des Verfahrens sind in den Ansprüchen 2 bis 21 beschrieben.

Das erfindungsgemäße Verfahren sieht vor, dass das Ausgangsmaterial zunächst auf eine Temperatur oberhalb der Rekristallisationstemperatur aufgeheizt wird und anschließend ein Temperaturausgleich über die gesamte Stablänge erfolgt. Darüber hinaus wird die Aufheiztemperatur des Stabes nahezu bis zum Einlauf in den Walzspalt konstant gehalten. Mit diesen Arbeitsschritten wird eine möglichst homogene Gefügestruktur des Stabes sowohl über dessen Länge als auch über dessen Querschnitt vor Eintritt in den Walzspalt angestrebt, die für den nachfolgenden Umformprozess von Vorteil ist. Bedingt durch die prozessspezifischen Eigenarten des Schrägwalzens und durch eine gezielte Festlegung der Walzparameter stellen sich im einstufigen Umformprozess eine vorbestimmte Verdrillung des Werkstoffes im Randbereich der Stäbe und ein Umformgradient über den Stabquerschnitt ein. Da die Umformrichtung beim Schrägwalzen schräg zur Walzgutachse verläuft und das Maximum der Umformung im Randbereich der Stäbe liegt, ist die umformbedingte Gefügestreckung in dieser Randzone besonders stark ausgeprägt und die Gefügeausrichtung verläuft entsprechend der Umformrichtung ebenfalls schräg zur Walzgutachse. Nach Überschreiten des kritischen Umformgrades läuft der dynamische Rekristallisationsprozess in dieser Randzone besonders intensiv ab, sodass ein Gefälle des Rekristallisationsgrades über den Stabquerschnitt von außen nach innen festzustellen ist. In der dem Umformprozess folgenden Nachwärmung oberhalb von Ac3 wird die statische Rekristallisation vervollständigt, die insbesondere in der Randzone zur Herausbildung feinkörnigen Austenits führt. Nach dem Härten und anschließendem Anlassen ist die Randzone durch feines Martensitgefüge hoher Festigkeit gekennzeichnet.

Die Erfindung weist gegenüber den bekannten Lösungen aus dem Stand der Technik beträchtliche Vorteile auf. Im Ergebnis der Kombination aus einer gezielten, einstufigen Umformung mittels Schrägwalzen und einer darauf abgestimmten Wärmebehandlung weisen die behandelten Stäbe über ihren Querschnitt ein Festigkeitsprofil auf, das im Randbereich seine Maximalwerte erreicht. Die durch das Schrägwalzen hervorgerufene Verdrillungsrichtung des Gefüges im Randbereich der Rundstäbe entspricht der Hauptspannungsrichtung eines auf Torsion beanspruchten Bauteils, und die daraus resultierenden Eigenschaftsmerkmale der Stäbe erschließen somit optimale Voraussetzungen für ihren Einsatz insbesondere in der Federnindustrie. Die durch das erfindungsgemäße Verfahren hervorgerufene Gefügeverteilung über den Stabquerschnitt führt in den fertig bearbeiteten Rundstäben zu einem Eigenschaftsprofil, das dem Spannungsprofil über den Stabquerschnitt bei Biege-und Torsionsbelastung adäquat ist. Aus einem derartigen Stahl hergestellte Stabilisatoren oder Schraubenfedern können bei gleicher Belastung vorteilhaft ein geringeres Gewicht aufweisen.

Da zur Ausbildung dieser vorteilhaften Festigkeitseffekte nur ein Umformschritt erforderlich ist und die nachfolgenden Bearbeitungsstufen im Wesentlichen in einer Wärme durchgeführt werden, ist folglich auch nur ein Aufheizvorgang für das Ausgangsmaterial notwendig, was verfahrensbedingt zu erheblichen Energie- und Zeiteinsparungen führt. Das erfindungsgemäße Verfahren zeichnet sich deshalb gegenüber bekannten Verfahren nicht nur durch eine Verbesserung der belastungs-orientierten Festigkeits- und Zähigkeitseigenschaften des Fertigproduktes, sondern darüber hinaus auch durch wirtschaftliche Vorteile auf Grund der Minimalanzahl von Prozessschritten aus.

Vorteilhafterweise wird das Ausgangsmaterial in Form von Rundstäben mit einer Aufheizgeschwindigkeit von 100 bis 400 K/s auf eine Temperatur zwischen 700 und 1100 °C induktiv aufgeheizt. Anschließend erfolgt ein Ausgleich der Aufheiztemperatur des Stabes über dessen Länge in einem Zeitraum von mindestens 10 Sekunden. Damit wird sichergestellt, dass der Temperaturunterschied über die Stablänge 5 K nicht überschreitet. Mittels einer geeigneten Nachwärmeinrichtung wird die Aufheiztemperatur des Stabes bis zum Einlauf in den Walzspalt konstant gehalten. Die Umformung selbst erfolgt durch ein Schrägwalzen in einem Schritt, bei dem die Stäbe gerade bleibend den Walzspalt durchlaufen. In Abhängigkeit vom Werkstoff des Ausgangsmaterials wird vorzugsweise in einem Temperaturbereich von 700-1150 °C umgeformt. Das Durchmesserverhältnis Ausgangsdurchmesser/Fertigdurchmesser wird so gewählt, dass das Schrägwalzen der Stäbe mit einem mittleren Streckgrad λ von größer 1,3 erfolgt und dass das Maximum der Umformung mindestens Ψ=0,3 beträgt. Über eine gezielte Einstellung der Walzparameter, wie z.B. Walzendrehzahl und Vorschubgeschwindigkeit, und durch eine spezielle Auswahl von Walzenkonturen mit spezifischen Winkelbeziehungen wird erreicht, dass das Maximum der Umformung im Randbereich zwischen 0,65 und 1,0 des Durchmessers der Stäbe liegt und dass sich ein gewünschter Umformgradient über den Stabquerschnitt einstellt. Vorzugsweise wird der Schrägwalzprozess so gesteuert, dass im Walzgut eine maximale lokale Temperaturerhöhung von 50 K nicht überschritten wird.

Bedingt durch die Umformung laufen nach Überschreiten eines kritischen Umformgrades dynamische Rekristallisationsprozesse ab, die in der Randzone auf Grund der maximalen Umformung stärker ausgeprägt sind als im Kernbereich der Stäbe. Die gezielte Einflussnahme auf die Ausbildung eines Umformgradienten über den Stabquerschnitt hat zur Folge, dass sich bereits im Zuge der dynamischen Rekristallisation erste Anzeichen einer differenzierten Gefügeverteilung über den Walzgutquerschnitt einstellen. So zeigen metallografische Untersuchungen an erfindungsgemäß gewalzten Stäben im rekristallisierten Zustand eine deutliche Abnahme des Anteils feiner Austenitkristallite von der Randzone in Richtung Kernbereich.

Die differenzierte Gefügeausbildung über den Walzgutquerschnitt wird darüber hinaus zusätzlich durch eine typische Eigenart des Schrägwalzens verstärkt. Da beim Schrägwalzen die Umformrichtung schräg zur Walzgutachse verläuft, kommt es insbesondere in den Randbereichen des Walzgutes auf Grund der höheren Umformung zu einer auffallenden Gefügestreckung. Entsprechend der Umformrichtung verläuft auch die Gefügestreckung schräg zur Walzgutachse und führt in den Randbereichen zu einer Verdrillung des Werkstoffes. Bei erfindungsgemäßem Verfahrensablauf beträgt die Verdrillungsrichtung des Gefüges im Randbereich der Stäbe bezogen auf die Längsachse des Stabes 35 bis 65 Winkelgrad und sie entspricht damit der Hauptspannungsrichtung eines auf Torsion beanspruchten Bauteils.

In der dargestellten Verfahrensweise des einstufigen Schrägwalzens durchläuft der zu walzende Stab in seiner gesamten Länge einen Walzspalt mit konstanter Walzspaltgeometrie. Diese Verfahrensweise wird gewählt, wenn Stäbe mit gleich bleibendem Durchmesser über die gesamte Stablänge hergestellt werden sollen. Das erfindungsgemäße Verfahren ermöglicht darüber hinaus eine alternative Verfahrensvariante, bei der die Walzspaltgeometrie im Betriebszustand während des Durchlaufs des zu walzenden Stabes durch den Walzspalt geändert wird. Diese flexible Arbeitsweise wird mit einem Schrägwalzgerüst realisiert, dessen Walzen bei Bedarf während der Umformung in axialer und/oder radialer Richtung verstellt werden können. Auf diese Weise ermöglicht das erfindungsgemäße Verfahren die Herstellung von Rundstäben mit variablem Durchmesser über die Stablänge.

Die schräggewalzten Stäbe werden unmittelbar nach dem Austritt aus dem Walzgerüst einer Nachwärmung bei einer Temperatur oberhalb Ac3 unterzogen. Die Nachwärmung erfolgt in der Weise, dass der Temperaturunterschied über die Länge eines Stabes auf 5 K begrenzt wird.

Entsprechend dem späteren Verwendungszweck werden die schräggewalzten und auf Rekristallisationstemperatur nachgewärmten Stäbe in einer Wärme entweder zu einer Schraubenfeder gewickelt oder zu einem Stabilisator gebogen.

Die gewickelten bzw. gebogenen Bauteile werden anschließend gehärtet und nachfolgend angelassen.

Stäbe, die für die Herstellung von Drehstabfedern vorgesehen sind, werden nach dem Nachwärmen im kalten Zustand an ihren Enden mechanisch bearbeitet, anschließend auf oberhalb Ac3 erwärmt, abgeschreckt und angelassen.

Makrountersuchungen an den fertig bearbeiteten Stäben weisen eine typische Gefügeverteilung über den Stabquerschnitt als Folge der erfindungsgemäßen Kombination aus Schrägwalzen und Wärmebehandlung auf. Die unmittelbare Randzone weist feinkörniges Martensitgefüge hoher Festigkeit auf. Der Randbereich weist eine durchgängige Gefügestreckung schräg zur Stabachse verlaufend auf, deren Verdrillungsrichtung der Hauptspannungsrichtung eines auf Torsion beanspruchten Bauteils entspricht. Das perlitisch-martensitische Mischgefüge der Kernzone ist grobkörniger als das Gefüge im Randbereich und weist keine Verdrillungserscheinungen auf.

Zur Einstellung optimaler Zähigkeits- und Festigkeitsparameter im Fertigprodukt werden beim erfindungsgemäßen Verfahren als Ausgangsmaterial Rundstäbe aus Federstahl, vorzugsweise Silizium-Chrom-Stähle mit Kohlenstoffgehalten < 0,8 %, verwendet. Alternativ können diese Stähle mit Vanadin oder Niob mikrolegiert sein.

Der Erfindungsgegenstand ist anhand eines Ausführungsbeispieles in der Zeichnung dargestellt und wird wie folgt beschrieben.

Die einzige Figur zeigt den prinzipiellen Aufbau einer Durchlauflinie zur erfindungsgemäßen thermomechanischen Behandlung von Rundstahlstäben aus einem Silizium-Chrom-Stahl.

Die zu behandelnden Stäbe werden in einer Induktionsanlage 1 auf eine Temperatur oberhalb der Rekristallisationstemperatur aufgeheizt, wobei ihr Gefüge austenitisiert wird. Im vorliegenden Beispiel werden die Rundstahlstäbe mit einer Aufheizgeschwindigkeit von 130 K/s auf eine Temperatur von 980 °C aufgeheizt. In einem der Induktionsanlage 1 nachgeschalteten Ausgleichsofen 2 erfolgt über eine Zeit von 15 s ein Ausgleich der Aufheiztemperatur der Stäbe, sodass der Temperaturverlauf über die Länge der Stäbe einen Gradienten von 4 K aufweist.

In diesem Zustand werden die nun gleichmäßig temperierten Rundstahlstäbe in einen Halteofen 3 eingebracht, um ihre Temperatur bis zum Eintritt in den Walzspalt konstant zu halten. Die aufgeheizten Stäbe werden sowohl im Ausgleichsofen 2 als auch im Halteofen 3 mittels Rollgängen 6 bzw. 7 transportiert.

In einem Schrägwalzgerüst 4 werden die auf 980 °C aufgeheizten Rundstahlstäbe in einem Walzschritt umgeformt. Dabei wird das Durchmesserverhältnis Ausgangsdurchmesser /Fertigdurchmesser so gewählt, dass mit einem mittleren Streckgrad λ = 1,5 gearbeitet wird und dass das Maximum der Umformung mindestens Ψ = 0,3 beträgt. Durch die gezielte Einstellung von Walzparametern, wie z.B. der Walzendrehzahl oder der Vorschubgeschwindigkeit und durch eine spezielle Auswahl von Walzenkonturen mit spezifischen Winkelbeziehungen, wird das Maximum der Umformung im Randbereich zwischen 0,65 und 1,0 des Durchmessers der Stäbe realisiert und somit ein erwünschter Umformgradient über den Stabquerschnitt eingestellt. Die Walzparameter werden so aufeinander abgestimmt, dass auf Grund des Umformprozesses eine maximale lokale Temperaturerhöhung von 50 K im Walzgut nicht überschritten wird. Die beim Schrägwalzen schräg zur Walzachse verlaufende Umformrichtung bewirkt in den Randbereichen des Walzgutes auf Grund der höheren Umformung eine ausgeprägte Gefügestreckung. Entsprechend der Umformrichtung verläuft diese Gefügestreckung ebenfalls schräg zur Walzgutachse und führt in den Randbereichen der Stäbe zu einer Verdrillung des Werkstoffes. Bei erfindungsgemäßem Verfahrensablauf beträgt die Verdrillungsrichtung des Gefüges, bezogen auf die Längsachse der Stäbe, 35 bis 65 Winkelgrad und sie entspricht damit der Hauptspannungsrichtung eines auf Torsion beanspruchten Bauteils.

Die gewalzten Stäbe gelangen nach ihrem Austritt aus dem Schrägwalzgerüst 4 in einen dem Gerüst nachgeschalteten Nachwärmofen 5, in dem sie zur Gewährleistung einer vollständigen statischen Rekristallisation einer Nachwärmung oberhalb der Ac3-Temperatur unterzogen werden. Der Transport der Stäbe durch den Nachwärmofen 5 erfolgt mittels eines Rollgangs 8. Nach Verlassen des Nachwärmofens 5 werden die schräggewalzten Stäbe mittels eines Übergaberollgangs 9 weiter transportiert. Von diesem Übergaberollgang 9 aus werden die Stäbe den weiteren vorgesehenen Verarbeitungsschritten zugeführt.

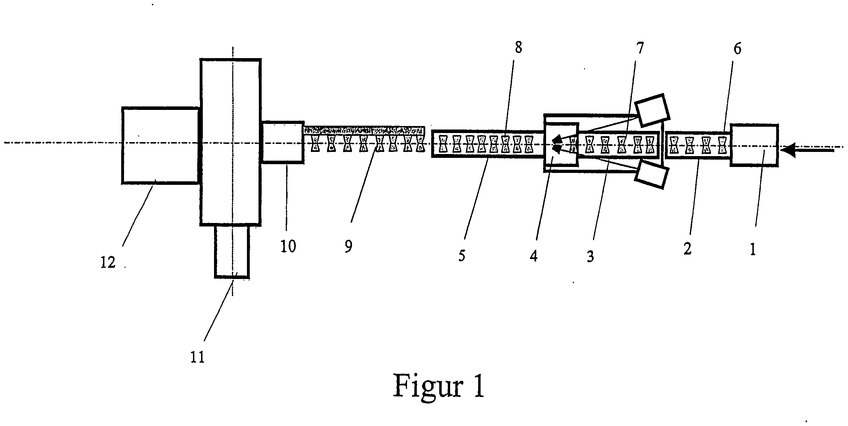

In Figur 1 ist eine Fertigungslinie zur Herstellung von gewickelten Schraubenfedern schematisch dargestellt. Danach werden die Stäbe über den Übergaberollgang 9 an einen Hubtisch 10 übergeben und sie gelangen von dort in eine CNC-Wickelbank 11, wo das Wickeln zu Schraubenfedern in einer Wärme nach dem Rekristallisieren erfolgt. Im Anschluss an den Wickelvorgang werden die nunmehr zu Schraubenfedern gewickelten Stäbe in ein Härtebecken 12 überführt, in dem sie abgeschreckt werden und ihr Gefüge zu Martensit umwandelt. Anschließend werden die gehärteten Schraubenfedern einer nicht dargestellten Anlassbehandlung unterzogen.

### Bezugszeichenliste

- 1.: Induktionsanlage
- 2.: Ausgleichsofen
- 3.: Halteofen
- 4.: Schrägwalzgerüst
- 5.: Nachwärmofen
- 6.: Rollgang
- 7.: Rollgang
- 8.: Rollgang
- 9.: Übergaberollgang
- 10.: Hubtisch
- 11.: CNC-Wickelbank
- 12.: Härtebecken

## Patentansprüche

1. Verfahren zum Herstellen von Schraubenfedern oder Stabilisatoren aus Stahl, wobei das Ausgangsmaterial auf eine Temperatur oberhalb der Rekristallisationstemperatur aufgeheizt, austenitisiert, temperaturausgleichend gehalten, danach verformt und abschließend zu Martensit abgeschreckt und angelassen wird, **dadurch gekennzeichnet, dass** von Rundstäben ausgegangen wird, deren Aufheiztemperatur über die Stablänge ausgeglichen wird, die danach durch Schrägwalzen, gerade bleibend derartig umgeformt werden, dass eine vorbestimmte Verdrillung des Werkstoffes im Randbereich und ein gewünschter Umformgradient über den Querschnitt erreicht wird und wobei nach Überschreitung des (kritischen) Umformgrades dynamische Rekristallisationsprozesse ablaufen, dass darauffolgend eine Nachwärmung oberhalb von Ac3 erfolgt, die Stäbe danach zu einer Schraubenfeder gewickelt oder zu einem Stabilisator gebogen und anschließend gehärtet und angelassen werden.

2. Verfahren nach Anspruch 1, **dadurch gekennzeichnet, dass** die Verdrillungsrichtung des Gefüges im Randbereich des Rundstabes der Hauptspannungsrichtung der auf Torsion beanspruchten Schraubenfeder bzw. des Stabilisators entspricht.

3. Verfahren nach Anspruch 1, **dadurch gekennzeichnet, dass** die Verdrillungsrichtung des Gefüges im Randbereich, bezogen auf die Achse des Rundstabes, 35 - 65 ° beträgt.

4. Verfahren nach einem oder mehreren der Ansprüche 1 bis 3, **dadurch gekennzeichnet, dass** das Schrägwalzen in einem Schritt durchgeführt wird.

5. Verfahren nach einem oder mehreren der Ansprüche 1 bis 4, **dadurch gekennzeichnet, dass** das Schrägwalzen des Stabes mit einem mittleren Streckgrad λ von mindestens 1,3 erfolgt.

6. Verfahren nach einem oder mehreren der Ansprüche 1 bis 5, **dadurch gekennzeichnet, dass** das Maximum der Umformung im Randbereich zwischen 0,65 und 1,0 des Durchmessers des Stabes liegt und mindestens 0,3 beträgt.

7. Verfahren nach einem oder mehreren der Ansprüche 1 bis 6, **dadurch gekennzeichnet, dass** das Material mit einer Geschwindigkeit zwischen 100 - 400 K/s aufgeheizt wird.

8. Verfahren nach einem oder mehreren der Ansprüche 1 bis 7, **dadurch gekennzeichnet, dass** das Ausgangsmaterial auf eine Temperatur zwischen 700 und 1100 °C aufgeheizt wird.

9. Verfahren nach einem oder mehreren der Ansprüche 1 bis 8, **dadurch gekennzeichnet, dass** die Aufheizung induktiv erfolgt.

10. Verfahren nach einem oder mehreren der Ansprüche 1 bis 9, **dadurch gekennzeichnet, dass** der Ausgleich der Aufheiztemperatur des Stabes über mindestens 10 Sekunden erfolgt.

11. Verfahren nach einem oder mehreren der Ansprüche 1 bis 10, **dadurch gekennzeichnet, dass** der Temperaturunterschied über die Stablänge 5 K nicht überschreitet.

12. Verfahren nach einem oder mehreren der Ansprüche 1 bis 11, **dadurch gekennzeichnet, dass** die Aufheiztemperatur des Stabes nahezu bis zu seinem Einlaufen zwischen die Walzen konstant gehalten wird.

13. Verfahren nach einem oder mehreren der Ansprüche 1 bis 12, **dadurch gekennzeichnet, dass** beim Schrägwalzen eine maximale lokale Temperaturerhöhung von 50 K nicht überschritten wird.

14. Verfahren nach einem oder mehreren der Ansprüche 1 bis 13, **dadurch gekennzeichnet, dass** das Schrägwalzen in einem Temperaturbereich von 700 - 1100 °C durchgeführt wird.

15. Verfahren nach einem oder mehreren der Ansprüche 1 bis 14, **dadurch gekennzeichnet, dass** die Walzen des Schrägwalzgerüstes während der Umformung verstellt werden und die Rundstäbe über die Stablänge mit einem variablen Durchmesser hergestellt werden.

16. Verfahren nach einem oder mehreren der Ansprüche 1 bis 15, **dadurch gekennzeichnet, dass** bei einer dem Schrägwalzen folgenden Nachwärmung oberhalb Ac3 der Temperaturunterschied über die Stablänge auf maximal 5 K begrenzt wird.

17. Verfahren nach einem oder mehreren der Ansprüche 1 bis 16, **dadurch gekennzeichnet, dass** von Federstahl ausgegangen wird.

18. Verfahren nach einem oder mehreren der Ansprüche 1 bis 16, **dadurch gekennzeichnet, dass** von einem Silizium Chrom Stahl ausgegangen wird.

19. Verfahren nach einem oder mehreren der Ansprüche 1 bis 16, **dadurch gekennzeichnet, dass** von einem mikrolegierten Stahl ausgegangen wird.

20. Durch ein Verfahren nach einem oder mehreren der Ansprüche 1 bis 19 hergestellte Schraubenfeder, **dadurch gekennzeichnet, dass** sie bei Belastung eine nahezu gleiche Spannungsverteilung über den Querschnitt aufweist.

21. Durch ein Verfahren nach einem oder mehreren der Ansprüche 1 bis 19 hergestellter Stabilisator, **dadurch gekennzeichnet, dass** der auf Torsion belastete Teil bei Belastung eine nahezu gleiche Spannungsverteilung über den Querschnitt aufweist.

## Claims

1. Method for producing helical springs or stabilisers from steel, wherein the starting material is heated to a temperature above the recrystallisation temperature, austenitised, held for temperature equalisation, then deformed and finally quenched to martensite and tempered, **characterised in that** round steel rods are the starting material, the heating temperature of which is equalised over the rod length and which are then reshaped by skew rolling while remaining straight such that a predetermined twisting of the material in the edge region and a desired reshaping gradient over the cross section is achieved, and wherein, after the (critical) degree of reshaping is exceeded, dynamic recrystallisation processes take place, that subsequently post-heating above Ac3 takes place, the rods are then wound to form a helical spring or bent to form a stabiliser and then hardened and tempered.

2. Method as claimed in claim 1, **characterised in that** the direction of twisting of the structure in the edge region of the round rod corresponds to the main direction of strain of the helical spring under torsional strain or of the stabiliser.

3. Method as claimed in claim 1, **characterised in that** the direction of twisting of the structure in the edge region with respect to the axis of the round rod amounts to 35-65°.

4. Method as claimed in any one or several of claims 1 to 3, **characterised in that** the skew rolling operation is carried out in one step.

5. Method as claimed in any one or several of claims 1 to 4, **characterised in that** the skew rolling of the rod is carried out with an average degree of stretching λ of at least 1.3.

6. Method as claimed in any one or several of claims 1 to 5, **characterised in that** the maximum reshaping in the edge region is between 0.65 and 1.0 times the diameter of the rod and amounts to at least 0.3.

7. Method as claimed in any one or several of claims 1 to 6, **characterised in that** the material is heated at a rate between 100-400 K/s.

8. Method as claimed in any one or several of claims 1 to 7, **characterised in that** the starting material is heated to a temperature between 700 and 1100° C.

9. Method as claimed in any one or several of claims 1 to 8, **characterised in that** the heating is carried out inductively.

10. Method as claimed in any one or several of claims 1 to 9, **characterised in that** the equalization of the heating temperature of the rod takes place over at least 10 seconds.

11. Method as claimed in any one or several of claims 1 to 10, **characterised in that** the temperature difference over the rod length does not exceed 5 K.

12. Method as claimed in any one or several of claims 1 to 11, **characterised in that** the heating temperature of the rod is kept constant almost up to its entry between the rolls.

13. Method as claimed in any one or several of claims 1 to 12, **characterised in that**, during the skew rolling operation, a maximum local temperature increase of 50 K is not exceeded.

14. Method as claimed in any one or several of claims 1 to 13, **characterised in that** the skew rolling operation is carried out in a temperature range of 700-1100° C.

15. Method as claimed in any one or several of claims 1 to 14, **characterised in that** the rollers of the skew roll stand are adjusted during the reshaping operation and the round rods are produced with a diameter which varies over the rod length.

16. Method as claimed in any one or several of claims 1 to 15, **characterised in that**, during an operation of post-heating above Ac3 following the skew rolling, the temperature difference over the rod length is limited to a maximum of 5 K.

17. Method as claimed in any one or several of claims 1 to 16, **characterised in that** spring steel is the starting material.

18. Method as claimed in any one or several of claims 1 to 16, **characterised in that** a silicon-chromium steel is the starting material.

19. Method as claimed in any one or several of claims 1 to 16, **characterised in that** a micro-alloyed steel is the starting material.

20. Helical spring produced by a method as claimed in any one or several of claims 1 to 19, **characterised in that**, under load, it has an almost uniform strain distribution over the cross section.

21. Stabiliser produced by a method as claimed in any one or several of claims 1 to 19, **characterised in that**, under load, the part under torsional load has an almost uniform strain distribution over the cross-section.

## Revendications

1. Procédé de fabrication de ressorts hélicoïdaux ou de stabilisateurs en acier, sachant que le matériau de départ est chauffé à une température située au-dessus de la température de recristallisation, est austénitisé et maintenu en condition d'égalisation de la température, puis formé, et est ensuite soumis à une trempe martensitique et revenu, **caractérisé en ce que**, partant de barres rondes, dont la température de chauffage est équilibrée sur la longueur de la barre, qui est ensuite façonnée par forgeage rotatif, tout en restant droite, déformée par laminage oblique pour l'obtention d'un vrillage prédéterminé du matériau dans la zone marginale et du taux de déformation souhaité sur la section transversale et sachant qu'après le dépassement du taux de déformation (critique), ont lieu des processus de recristallisation dynamiques, et, ensuite, un réchauffage au-dessus de Ac3, que les barres sont ensuite enroulées en forme de vis hélicoïdales ou pliées en forme de stabilisateurs et sont ensuite trempées et revenues.

2. Procédé selon la revendication 1, **caractérisé en ce que** la sens de vrillage de la structure dans la région marginale de la barre ronde correspond à la direction de la tension principale du ressort hélicoïdal, respectivement du stabilisateur.

3. Procédé selon la revendication 1, **caractérisé en ce que** la direction de vrillage de la structure est de 35 à 65 ° dans la zone marginale, par rapport à l'axe de la barre ronde.

4. Procédé selon l'une ou plusieurs des revendications 1 à 3, **caractérisé en ce que** le laminage oblique est exécuté en une étape.

5. Procédé selon l'une ou plusieurs des revendications 1 à 4, **caractérisé en ce que** le laminage oblique de la barre est effectué avec un taux d'étirage moyen Λ d'au moins 1,3.

6. Procédé selon l'une ou plusieurs des revendications 1 à 5, **caractérisé en ce que** le maximum de la déformation, dans la zone marginale, est situé entre 0,65 et 1,0 du diamètre de la barre, et est d'au moins 0,3.

7. Procédé selon l'une ou plusieurs des revendications 1 à 6, **caractérisé en ce que** le matériau est chauffé à une vitesse située entre 100 et 400 K/s.

8. Procédé selon l'une ou plusieurs des revendications 1 à 7, caractérisé en ce le matériau de départ est chauffé à une température située entre 700 et 1100 °C.

9. Procédé selon l'une ou plusieurs des revendications 1 à 8, **caractérisé en ce que** le chauffage est un chauffage inductif.

10. Procédé selon l'une ou plusieurs des revendications 1 à 9, **caractérisé en ce que** l'équilibrage de la température de chauffage de la barre est effectué pendant au moins 10 secondes.

11. Procédé selon l'une ou plusieurs des revendications 1 à 10, **caractérisé en ce que** la différence de température sur la longueur de la barre ne dépasse pas 5 K.

12. Procédé selon l'une ou plusieurs des revendications 1 à 11, **caractérisé en ce que** la température de chauffage de la barre est maintenue constante presque jusqu'à son introduction entre les cylindres.

13. Procédé l'une ou plusieurs des revendications 1 à 12, **caractérisé en ce que**, lors du laminage oblique, une élévation de température locale, maximale de 50 K n'est pas dépassée.

14. Procédé selon l'une ou plusieurs des revendications 1 à 13, **caractérisé en ce que** le laminage oblique est exécuté dans une plage de température de 700 à 1100 °C.

15. Procédé selon l'une ou plusieurs des revendications 1 à 14, **caractérisé en ce que** les cylindres de l'appareil de laminage oblique sont ajustés pendant le formage et que les barres rondes sont fabriquées avec un diamètre variable sur la longueur de la barre.

16. Procédé selon l'une ou plusieurs des revendications 1 à 15, **caractérisé en ce que**, lors d'un réchauffage supérieur à Ac3 faisant suite au laminage oblique, la différence de température est limitée à un maximum de 5 K sur la longueur de la barre.

17. Procédé selon l'une ou plusieurs des revendications 1 à 16, **caractérisé en ce que** le matériau de départ est un acier à ressort.

18. Procédé selon l'une ou plusieurs des revendications 1 à 16, **caractérisé en ce que** le matériau de départ est un acier au silicium et chrome.

19. Procédé selon l'une ou plusieurs des revendications 1 à 16, **caractérisé en ce que** le matériau de départ est acier micro allié.

20. Ressort hélicoïdal, fabriqué par un procédé selon l'une ou plusieurs des revendications 1 à 19, **caractérisé en ce que**, sous pression en charge, il présente une répartition des tensions presque uniforme sur la section transversale.

21. Ressort hélicoïdal, fabriqué par un procédé selon l'une ou plusieurs des revendications 1 à 19, **caractérisé en ce que**, sous pression en charge, la partie soumise au vrillage présente une répartition de tension presque uniforme sur la section transversale.
